(19)

Europäisches Patentamt
European Patent Office
Office européen des brevets

(11)  **EP 3 827 252 B1**

(12)  **EUROPÄISCHE PATENTSCHRIFT**

(45) Veröffentlichungstag und Bekanntmachung des Hinweises auf die Patenterteilung:
**14.08.2024   Patentblatt 2024/33**

(21) Anmeldenummer: **19731253.1**

(22) Anmeldetag: **14.06.2019**

(51) Internationale Patentklassifikation (IPC):
**G01N 27/22** *(2006.01)*      **G01F 23/26** *(2022.01)*

(52) Gemeinsame Patentklassifikation (CPC):
**G01N 27/221; G01F 23/263; G01F 23/804**

(86) Internationale Anmeldenummer:
**PCT/EP2019/065669**

(87) Internationale Veröffentlichungsnummer:
**WO 2020/020534 (30.01.2020 Gazette 2020/05)**

(54) **KAPAZITIVE ÜBERPRÜFUNG DER QUALITÄT EINER FLUIDKONZENTRATION**

CAPACITIVE QUALITY CHECKING OF A FLUID CONCENTRATION

CONTROLE CAPACITIF DE QUALITE D'UNE CONCENTRATION DE FLUIDE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **26.07.2018   DE 102018118064**

(43) Veröffentlichungstag der Anmeldung:
**02.06.2021   Patentblatt 2021/22**

(73) Patentinhaber: **Kautex Textron GmbH & Co. KG**
**53229 Bonn (DE)**

(72) Erfinder:
• **WOLF, Hartmut**
**53639 Königswinter (DE)**
• **ELSASSER, Carsten**
**50259 Pulheim (DE)**
• **GUSE, Christoph**
**53359 Rheinbach (DE)**

(74) Vertreter: **Richly & Ritschel Patentanwälte PartG mbB**
**Sattlerweg 20**
**51429 Bergisch Gladbach (DE)**

(56) Entgegenhaltungen:
DE-A1- 102005 022 933     DE-A1- 19 645 970
DE-A1- 4 210 737          US-A- 4 295 370
US-A- 5 051 921

• **INSTRUMENTS TEXAS: "Capacitive-Based Liquid Level Sensing Sensor Reference Design", 1 March 2015 (2015-03-01), pages 1 - 23, XP055616834, Retrieved from the Internet <URL:http://www.ti.com/lit/ug/tidu736a/tidu736a.pdf> [retrieved on 20190830]**
• **VINAY DIVAKAR: "Fuel Gauge Sensing Technologies for Automotive Applications", INTERNATIONAL JOURNAL OF ADVANCED RESEARCH IN COMPUTER ENGINEERING & TECHNOLOGY, 1 January 2014 (2014-01-01), pages 40, XP055616953, Retrieved from the Internet <URL:https://pdfs.semanticscholar.org/a8cc/fd2c824524a147c384c1c9a542b6048ab167.pdf> [retrieved on 20190830]**

**Beschreibung**

Die vorliegende Erfindung betrifft einen Kunststoffbehälter mit einer Vorrichtung zum Bestimmen einer Qualitätseigenschaft von in dem Kunststoffbehälter befindlichem Füllgut. Weiterhin betrifft die vorliegende Erfindung ein Verfahren zum Bestimmen einer Qualitätseigenschaft von in einem Kunststoffbehälter befindlichem Füllgut.

Hersteller von Pflanzenschutzmitteln und chemischen Erzeugnissen, die jeweils Füllgut im Sinne der vorliegenden Erfindung darstellen, haben das Problem, dass die Inhaltsstoffe des Füllguts in Originalgebinden entweder verdünnt oder sogar ausgetauscht werden. Veränderungen bzw. Manipulationen am Inhalt von Großgebinden, z.B. an Fässern können heute nicht direkt im Feld nachgeprüft werden. Ferner müssen bei bestimmten Füllgütern diese vor Lichteinstrahlung von Licht in einem Wellenlängenbereich von 200nm bis 850nm geschützt werden, da eine entsprechende Exponierung mit Licht das Füllgut verändert werden würde. Entsprechende Gebinde, die im Sinne der vorliegenden Erfindung Kunststoffbehälter darstellen, sind lichtundurchlässig ausgebildet, so dass eine optische Überprüfung des Füllguts ausgeschlossen ist.

Aus US 5 051 921 A oder DE 10 2005 022933 A1 sind Vorrichtungen bekannt, die eine Qualitätseigenschaft eines in einem Behälter befindlichen Messgutes durch eine kapazitive Messung bestimmen. Die Sensorflächen der Messvorrichtung sind als Streufeldkondensatoren ausgebildet und befinden sich in Kontakt mit dem Messgut.

An einem Verschluss eines Kunststoffbehälters angebrachte Siegel und/oder Hologramme können in kurzer Zeit gefälscht werden. Motoröl, was im Sinne der vorliegenden Erfindung ebenfalls ein Füllgut darstellt, wird beispielsweise mit UV-Markern versehen, so dass in einem abgedunkelten Bereich das entnommene Füllgut untersucht werden kann. Hingegen ist ein Nachweis einer Verdünnung schwierig oder gar unmöglich.

Der vorliegenden Erfindung liegt die Aufgabe zugrunde, eine Vorrichtung zum Bestimmen einer Qualitätseigenschaft von in einem Kunststoffbehälter befindlichem Füllgut bereitzustellen. Ferner liegt der vorliegenden Erfindung die Aufgabe zugrunde, ein Verfahren zum Bestimmen einer Qualitätseigenschaft von in einem Kunststoffbehälter befindlichem Füllgut bereitzustellen.

Die der vorliegenden Erfindung zugrundeliegende Aufgabe wird durch eine Vorrichtung mit den Merkmalen des Anspruchs 1 gelöst. Vorteilhafte Ausgestaltungen der Vorrichtung sind in den von Anspruch 1 abhängigen Ansprüchen beschrieben.

Im Genaueren wird die der vorliegenden Erfindung zugrundeliegende Aufgabe durch ein Gebinde zur Aufnahme von Füllgut gelöst, wobei das Gebinde ein Kuhstoffbehälter ist, umfassend eine Vorrichtung zum Bestimmen einer Qualitätseigenschaft vom Füllgut, wobei die Vorrichtung einen an einer Behälterwand des Kunststoffbehälters angebrachten Kondensator aufweist, der eine erste Elektrode und eine zweite Elektrode aufweist. Die Vorrichtung weist ferner eine elektronische Steuerungseinrichtung auf, die mit der ersten Elektrode und der zweiten Elektrode elektrisch gekoppelt ist. Weiterhin weist die Vorrichtung eine Anzeigeeinrichtung zum Anzeigen der Qualitätseigenschaft auf, wobei die Anzeigeeinrichtung mit der Steuerungseinrichtung zum Übertragen von Daten von der Steuerungseinrichtung an die Anzeigeeinrichtung datengekoppelt ist. Die elektronische Steuerungseinrichtung ist dazu ausgebildet, basierend auf an den Kondensator angelegten elektrischen Spannungen die Qualitätseigenschaft des Füllguts zu bestimmen und die Qualitätseigenschaft des Füllguts repräsentierenden Daten an die Anzeigeeinrichtung zu übertragen. Erfindungsgemäss ist der Kondensator auf einem Trägerelement angeordnet, wobei das Trägerelement eine Klebeschicht aufweist, die derart ausgebildet ist, dass das Trägerelement reversibel auf der Behälterwand anbringbar ist.

Die erfindungsgemäße Vorrichtung weist den Vorteil auf, dass eine Bestimmung, ob eine im Kunststoffbehälter befindliches Füllgut einer vorgegebenen Qualitätsanforderung entspricht, zuverlässig ohne direkten Kontakt einer Messeinrichtung, im vorliegenden Fall des Kondensators, mit dem Füllgut ermöglicht ist. Die vorbestimmte Qualitätsanforderung korreliert mit der elektrischen Leitfähigkeit und/oder dielektrischen Leitfähigkeit des Füllguts. Somit kann durch Bestimmen der elektrischen Leitfähigkeit und/oder der dielektrischen Leitfähigkeit des im Kunststoffbehälterinnenraum befindlichen Füllguts auf Qualitätseigenschaften des Füllguts rückgeschlossen werden.

Das Füllgut liegt vorzugsweise in flüssiger Form vor, so dass das Füllgut eine Flüssigkeit ist.

Die erste Elektrode und die zweite Elektrode des Kondensators weisen jeweils eine Höhe, eine Breite und eine Tiefe auf. Frontflächen der ersten Elektrode und der zweiten Elektrode weisen eine der Höhe entsprechende Höhenerstreckung und eine der Breite entsprechende Breitenerstreckung auf. Seitenflächen, die auch als Seitenkanten bezeichnet werden können, der ersten Elektrode und der zweiten Elektrode weisen eine der Höhe entsprechende Höhenerstreckung und eine der Tiefe entsprechende Breitenerstreckung auf. Die erste Elektrode und die zweite Elektrode sind so zueinander angeordnet, dass eine Seitenfläche der ersten Elektrode einer Seitenfläche der zweiten Elektrode gegenüberliegend angeordnet ist.

Bei Anbringung des Kondensators an einer Außenfläche einer Behälterwand des Kunststoffbehälters sind jeweilige Frontflächen der ersten Elektrode und der zweiten Elektrode jeweils der Behälterwand gegenüberliegend angeordnet.

Der Kondensator ist an einer Außenseite der Behälterwand angebracht. Folglich ist der Kondensator dann an einer dem Behälterinnenraum abgewandten Seite angebracht.

Der Kondensator ist auf einem Trägerelement angeordnet. Das Trägerelement ist vorzugsweise aus einem Kunststoff gebildet. Das Trägerelement weist eine Klebeschicht auf, so dass das Trägerelement auf eine Behälterwand geklebt werden kann. Darüber hinaus ist die Klebeschicht derart ausgebildet, dass das Trägerelement reversibel auf der Behälterwand anbringbar ist.

Die Steuerungseinrichtung ist mit dem Kondensator, im Genaueren mit der ersten Elektrode und mit der zweiten Elektrode zum Austausch von Informationen signalgekoppelt.

Die elektrische Kopplung zwischen der Steuerungseinrichtung und der ersten und zweiten Elektrode des Kondensators, die auch als Signalkopplung bezeichnet werden kann, ist vorzugsweise mittels elektrischer Leiter realisiert. Weiter vorzugsweise ist die elektrische Kopplung zwischen der Steuerungseinrichtung und der ersten und zweiten Elektrode des Kondensators drahtlos realisiert.

Die Datenkopplung zwischen der Anzeigeeinrichtung und der Steuerungseinrichtung ist vorzugsweise mittels elektrischer Leiter realisiert. Weiter vorzugsweise ist die Datenkopplung zwischen der Anzeigeeinrichtung und Steuerungseinrichtung drahtlos realisiert.

Die Anzeigeeinrichtung ist dazu ausgebildet, die von der Steuerungseinrichtung empfangenen und die Qualitätseigenschaft des Füllguts repräsentierenden Daten darzustellen.

Vorzugsweise werden an den Kondensator elektrische Wechselspannungen angelegt. Diese elektrischen Wechselspannungen weisen weiter vorzugsweise unterschiedliche Frequenzen auf. Weiter vorzugsweise weisen die elektrischen Spannungen unterschiedliche Amplituden auf.

Die Vorrichtung ist vorzugsweise derart ausgebildet, dass die Steuerungseinrichtung dazu ausgebildet ist, folgende Schritte durchzuführen:

- Anlegen von zumindest zwei unterschiedliche Frequenzen aufweisenden Wechselspannungen an den Kondensator;
- Bestimmen und Speichern von zumindest zwei Impedanzen des Kondensators, die mit den zwei unterschiedlichen Wechselspannungen assoziiert sind, und/oder von zumindest zwei Kapazitäten des Kondensators, die die mit den zwei unterschiedlichen Wechselspannungen assoziiert sind;
- Bestimmen der Qualitätseigenschaft basierend auf den zumindest zwei mit den unterschiedlichen Wechselspannungen assoziierten Impedanzen und/oder Kapazitäten des Kondensators; und
- Übertragen von die Qualitätseigenschaft des Füllguts repräsentierenden Daten an die Anzeigeeinrichtung.

Dabei ist die Vorrichtung vorzugsweise derart ausgebildet, dass die Steuerungseinrichtung dazu ausgebildet ist, folgende Schritte durchzuführen:

- Anlegen von zumindest drei unterschiedlichen Wechselspannungen an den Kondensator, wobei eine erste Frequenz einer ersten Wechselspannung einer unteren Grenzfrequenz, eine zweite Frequenz einer zweiten Wechselspannung einer Frequenz zwischen der unteren Grenzfrequenz und einer oberen Grenzfrequenz und eine dritte Frequenz einer dritten Wechselspannung der oberen Grenzfrequenz entspricht;
- Bestimmen und Speichern einer ersten Impedanz des Kondensators für die erste Frequenz, einer zweiten Impedanz des Kondensators für die zweite Frequenz und einer dritten Impedanz des Kondensators für die dritte Frequenz;
- Bestimmen eines ersten Phasenwinkels aus der ersten Impedanz, eines zweiten Phasenwinkels aus der zweiten Impedanz und eines dritten Phasenwinkels aus der dritten Impedanz; und
- Bestimmen, dass ein im Kunststoffbehälter befindliches Füllgut einer Qualitätsanforderung genügt, wenn der zweite Phasenwinkel größer als der erste Phasenwinkel und größer als der dritte Phasenwinkel ist.

Die frequenzabhängige Impedanz des Kondensators hängt von der elektrischen Leitfähigkeit des Mediums ab, das von dem elektrischen Wechselfeld zwischen der ersten Elektrode und der zweiten Elektrode durchdrungen wird. Somit hängt die frequenzabhängige Impedanz des Kondensators von dem Material der Behälterwand und von der im Kunststoffbehälterinnenraum befindlichem Füllgut ab.

Die Anmeldmelderin hat herausgefunden, dass der Verlauf der Impedanz des Kondensators über die Frequenz der angelegten Wechselspannung eindeutige Rückschlüsse auf Qualitätseigenschaften des Füllguts ermöglicht. So hat die Anmelderin festgestellt, dass der Phasenwinkel der Impedanz zwischen einer unteren Grenzfrequenz und einer oberen Grenzfrequenz ein Maximum aufweist, wenn die elektrische Leitfähigkeit des Füllguts niedrig ist. Dabei hängen die untere Grenzfrequenz und die obere Grenzfrequenz der an den Kondensator angelegten Wechselspannung von der Geometrie des Kondensators und der Größe der Elektroden des Kondensators und dem Abstand der Elektroden des Kondensators voneinander ab.

Für Wasser als Füllgut hat die Anmelderin festgestellt, dass der frequenzabhängige Phasenverlauf der Impedanz des Kondensators für eine elektrische Leitfähigkeit zwischen 1 μS/cm und 50 μS/cm aufweisendes deionisiertes Wasser innerhalb des Kunststoffbehälters in einem Frequenzbereich zwischen 10 kHz und 1 MHz ein Maximum aufweist. Der Frequenzbereich kann sich jedoch in Abhängigkeit der Größe und der Geometrie des Kondensators verändern.

Bei dem Verfahrensschritt des Anlegens von zumindest drei unterschiedlichen Wechselspannungen an den Kondensator werden vorzugsweise eine Vielzahl, also mehr als drei unterschiedliche Wechselspannungen mit jeweils unterschiedlichen Frequenzen in einem Frequenzbereich zwischen der unteren Grenzfrequenz und der oberen Grenzfrequenz an den Kondensator angelegt.

Sowohl die untere Grenzfrequenz als auch die obere Grenzfrequenz sind von der Geometrie und den Abmessungen des Kondensators abhängig und können daher variieren. Insbesondere beträgt die untere Grenzfrequenz 10 kHz und die obere Grenzfrequenz 1 MHz. Weiter vorzugsweise beträgt die obere Grenzfrequenz 100 kHz.

Die Frequenzabstände der jeweiligen zueinander benachbarten Wechselspannungen sind vorzugsweise variabel und hängen von der Geometrie und den Abmessungen des Kondensators und von der zu erreichenden Messauflösung ab. Insbesondere Beträgt der Frequenzabstand zwischen den Frequenzen der unterschiedlichen Wechselspannungen 1 kHz.

Der Phasenwinkel ist der Winkel zwischen der am Kondensator anliegenden Spannung und des durch den Kondensator fließenden Stroms.

Folglich wird im Verfahrensschritt des Bestimmens eines Phasenwinkels ein frequenzabhängiger Phasenverlauf zwischen der Spannung und dem Strom bestimmt.

Vorzugsweise ist die Vorrichtung derart ausgebildet, dass die Steuerungseinrichtung dazu ausgebildet ist, folgenden Schritt durchzuführen:

- Ausgeben eines Freigabesignals, wenn der zweite Phasenwinkel größer als der erste Phasenwinkel und größer als der dritte Phasenwinkel ist.

Durch Ausgabe eines Freigabesignals kann signalisiert werden, dass das im Kunststoffbehälterinnenraum befindliche Füllgut einer vorgegebenen Qualitätsanforderung entspricht.

Weiter vorzugsweise ist die Vorrichtung derart ausgebildet, dass die Steuerungseinrichtung dazu ausgebildet ist, folgenden Verfahrensschritt auszuführen:

- Ausgeben eines Warnsignals, wenn der dritte Phasenwinkel größer als der zweite Phasenwinkel oder gleich dem zweiten Phasenwinkel ist.

Bei dem Verfahrensschritt E des Ausgebens eines Warnsignals wird dieses folglich lediglich dann ausgegeben, wenn in einem frequenzabhängigen Verlauf des Phasenwinkels zwischen der unteren Grenzfrequenz und der oberen Grenzfrequenz kein Maximum des Phasenwinkels bestimmbar ist.

Wenn zwischen der unteren Grenzfrequenz und der oberen Grenzfrequenz kein Maximum des Phasenwinkels bestimmbar ist, eine Differenz zwischen dem dritten Phasenwinkel und dem ersten Phasenwinkel jedoch größer als ein vorgegebener Minimalverlustwinkel ist, dann kann das im Kunststoffbehälterinnenraum befindliche Füllgut eine Qualität aufweisen, die noch ausreichend ist. Jedoch wird ein Warnsignal ausgegeben, so dass ein Benutzer der Vorrichtung darauf hingewiesen werden kann, dass das im Kunststoffbehälterinnenraum befindliche Füllgut eine verminderte Qualität aufweist.

Unter einem Verlustwinkel ist die Differenz von -90° und dem Phasenwinkel der Impedanz zu verstehen.

Vorzugsweise ist die Vorrichtung derart ausgebildet, dass die Steuerungseinrichtung dazu ausgebildet ist, folgenden Schritt durchzuführen:

- Ausgeben eines Stoppsignals, wenn eine Differenz zwischen dem dritten Phasenwinkel und dem ersten Phasenwinkel kleiner als ein vorgegebener Minimalverlustwinkel ist.

Wenn die Differenz zwischen dem dritten Phasenwinkel und dem ersten Phasenwinkel kleiner als ein vorgegebener Minimalverlustwinkel ist, dann kann das im Kunststoffbehälterinnenraum befindliche Füllgut eine Qualität aufweisen, die nicht ausreichend ist.

Vorzugsweise ist die Vorrichtung derart ausgebildet, dass die Steuerungseinrichtung dazu ausgebildet ist, folgende Schritte durchzuführen:

- Anlegen von zumindest zwei unterschiedlichen Wechselspannungen an den Kondensator, wobei eine erste Frequenz einer ersten Wechselspannung einer unteren Grenzfrequenz und eine zweite Frequenz einer zweiten Wechselspannung einer oberen Grenzfrequenz entspricht;
- Bestimmen und Speichern einer ersten Kapazität des Kondensators für die erste Frequenz und einer zweiten Kapazität des Kondensators für die zweite Frequenz;
- Ermitteln einer relativen Abweichung der zweiten Kapazität von der ersten Kapazität; und
- Bestimmen, dass das im Kunststoffbehälter befindliche Füllgut einer vorgegebenen Qualitätsanforderung genügt, wenn die relative Abweichung der zweiten Kapazität von der ersten Kapazität größer als eine erste Mindestabweichung ist.

Die entsprechend ausgebildete Vorrichtung weist den Vorteil auf, dass eine Bestimmung, ob ein im Kunststoffbehälter befindliches Füllgut einer vorgegebenen Qualitätsanforderung entspricht, zuverlässig ohne direkten Kontakt einer Messeinrichtung, im vorliegenden Fall des Kondensators, mit dem Füllgut ermöglicht ist. Die vorbestimmte Qualitätsanforderung korreliert mit der Kapazität des Kondensators, die wiederum von dem Medium abhängt, den das elektrische Wechselfeld zwischen der ersten Elektrode und der zweiten Elektrode des Kondensators durchdringt. Somit kann durch Bestimmen der frequenzabhängigen Kapazität des Kondensators auf Qualitätseigenschaften des Füllguts rückgeschlossen werden.

Die frequenzabhängige Kapazität des Kondensators hängt von der elektrischen Leitfähigkeit und/oder der dielektrischen Leitfähigkeit des Mediums ab, das von dem elektrischen Wechselfeld zwischen der ersten Elektrode und der zweiten Elektrode des Kondensators durchdrungen wird. Somit hängt die frequenzabhängige Kapazität des Kondensators von dem Material der Behälterwand und von der im Kunststoffbehälterinnenraum befindlichem Füllgut ab.

Die Anmelderin hat herausgefunden, dass der Verlauf der Kapazität des Kondensators über die Frequenz der angelegten Wechselspannung eindeutige Rückschlüsse auf Qualitätseigenschaften des Füllguts ermöglicht. So hat die Anmelderin festgestellt, dass der Verlauf der Kapazität des Kondensators zwischen einer unteren Grenzfrequenz und einer oberen Grenzfrequenz eine gewisse Abweichung, beispielsweise einen gewissen Abfall aufweisen muss, wenn die elektrische Leitfähigkeit des Füllguts niedrig ist. Dabei hängen die untere Grenzfrequenz und die obere Grenzfrequenz der an den Kondensator angelegten Wechselspannung von der Geometrie des Kondensators und der Größe der Elektroden des Kondensators und dem Abstand der Elektroden des Kondensators voneinander ab.

Die Anmelderin hat festgestellt, dass die Kapazität des Kondensators für eine elektrische Leitfähigkeit zwischen 1 μS/cm und 50 μS/cm aufweisendes deionisiertes Wasser als Füllgut innerhalb des Kunststoffbehälters in einem Frequenzbereich zwischen 10 kHz und 1 MHz um zumindest 20% abweicht. Somit beträgt die Differenz zwischen der Kapazität des Kondensators bei einer Frequenz von 1 MHz und der Kapazität des Kondensators bei einer Frequenz von 10 kHz zumindest 20%. Der Frequenzbereich kann sich jedoch in Abhängigkeit der Größe und der Geometrie des Kondensators verändern.

Bei dem Verfahrensschritt des Ermittelns der relativen Abweichung der zweiten Kapazität von der ersten Kapazität wird folgende Berechnung durchgeführt:

$$\text{delta} = |\text{Cfmin} - \text{Cfmax}| \,/\, \text{Cfmin}$$

Dabei ist:

- fmin die untere Grenzfrequenz
- fmax die obere Grenzfrequenz
- Cfmin die erste Kapazität des Kondensators bei einer die untere Grenzfrequenz fmin aufweisenden Wechselspannung
- Cfmax die zweite Kapazität des Kondensators bei einer die obere Grenzfrequenz fmax aufweisenden Wechselspannung
- delta die relative Abweichung der zweiten Kapazität Cfmax von der ersten Kapazität Cfmin

Die erste Mindestabweichung beträgt vorzugsweise mehr als 0,2.

Für deionisiertes Wasser und einer unteren Grenzfrequenz von 10 kHz und einer oberen Grenzfrequenz von 100 kHz beträgt die Mindestabweichung beispielsweise etwa 0,2, wenn die Elektroden des Kondensators eine Längenerstreckung von 100 mm, eine Breitenerstreckung von 50 mm und einen Abstand der ersten Elektrode zur zweiten Elektrode von 10 mm aufweisen.

Vorzugsweise ist die Vorrichtung derart ausgebildet, dass die elektronische Steuerungseinrichtung dazu ausgebildet ist, folgenden Schritt durchzuführen:

- Ausgeben eines Freigabesignals, wenn die relative Abweichung der zweiten Kapazität von der ersten Kapazität größer als die erste Mindestabweichung ist.

Weiter vorzugsweise ist die Vorrichtung derart ausgebildet, dass die elektronische Steuerungseinrichtung dazu ausgebildet ist, folgenden Schritt durchzuführen:

- Ausgeben eines Warnsignals, wenn die relative Abweichung der zweiten Kapazität von der ersten Kapazität einen Wert zwischen der ersten Mindestabweichung und einer zweiten Mindestabweichung aufweist, wobei die zweite Mindestabweichung kleiner als die erste Mindestabweichung ist.

Weiter vorzugsweise ist die Vorrichtung derart ausgebildet, dass die elektronische Steuerungseinrichtung dazu ausgebildet ist, folgenden Schritt durchzuführen:

- Ausgeben eines Stoppsignals, wenn die relative Abweichung der zweiten Kapazität von der ersten Kapazität kleiner als eine zweite Mindestabweichung ist, wobei die zweite Mindestabweichung kleiner als die erste Mindestabweichung ist.

Erfindungsgemäß ist die Vorrichtung derart ausgebildet, dass der Kondensator auf einem Trägerelement angeordnet ist.

Das Trägerelement ist vorzugsweise als Kunststoffträgerelement ausgebildet.

Weiter vorzugsweise weist die Vorrichtung ein mikroelektromechanisches System auf, mittels dem eine Raumlage des Trägerelements bestimmbar ist, wobei das mikroelektromechanische System mit der Steuerungseinrichtung zum Übertragen von die Raumlage des Trägerelements repräsentierenden Daten datengekoppelt ist, und wobei die Anzeigeeinrichtung dazu ausgebildet ist, basierend auf den die Raumlage des Trägerelements repräsentierenden Daten einen Pegelverlauf des Füllguts innerhalb des Kunststoffbehälters darzustellen.

Das mikroelektromechanische System wird auch als MEMS bezeichnet und weist vorzugsweise zumindest einen Beschleunigungssensor auf.

Vorzugsweise ist die Vorrichtung derart ausgebildet, dass die Anzeigeeinrichtung zusammen mit dem Kondensator auf dem Trägerelement angeordnet ist.

Erfindungsgemäß ist das Trägerelement reversibel auf den Kunststoffbehälter anbringbar. Das Trägerelement weist hierfür eine Klebefläche auf. Es ist vorzugsweise auch möglich, dass das Trägerelement formschlüssig mit dem Kunststoffbehälter verbunden wird.

Vorzugsweise ist die Anzeigeeinrichtung gedruckt.

Vorzugsweise ist die Vorrichtung derart ausgebildet, dass die Steuerungseinrichtung zusammen mit dem Kondensator auf dem Trägerelement angeordnet ist.

Die entsprechend ausgebildete Vorrichtung baut sehr kompakt.

Weiter vorzugsweise ist die Vorrichtung derart ausgebildet, dass die Anzeigeeinrichtung von dem Kondensator räumlich getrennt ist.

Weiter vorzugsweise ist die Vorrichtung derart ausgebildet, dass die Steuerungseinrichtung von dem Kondensator räumlich getrennt ist.

Weiter vorzugsweise ist die Vorrichtung derart ausgebildet, dass die Vorrichtung ein Handgerät aufweist, in dem die Anzeigeeinrichtung und/oder die Steuerungseinrichtung angeordnet ist/sind.

Die entsprechend ausgebildete Vorrichtung weist den Vorteil auf, dass mittels lediglich einem Handgerät mehrere Inhalte von mehreren Kunststoffbehältern überprüft werden können, wobei lediglich eine einzige Steuerungseinrichtung und eine einzige Anzeigeeinrichtung notwendig sind.

Weiter vorzugsweise ist die Vorrichtung derart ausgebildet, dass die Vorrichtung ein Piezoelement zum Erzeugen von elektrischer Energie aufweist, wobei das Piezoelement mit dem Kondensator zur Übertragung von elektrischer Energie und zum Anlegen einer elektrischen Spannung an den Kondensator elektrisch verbunden ist.

Weiter vorzugsweise ist die Vorrichtung derart ausgebildet, dass das Piezoelement mit der Anzeigeeinrichtung zur Übertragung von elektrischer Energie an die Anzeigeeinrichtung elektrisch verbunden ist.

Weiter vorzugsweise ist die Vorrichtung derart ausgebildet, dass das Piezoelement zur Übertragung von elektrischer Energie mit der Steuerungseinrichtung verbunden ist.

Durch Bereitstellung eines Piezoelements können der Kondensator und/oder die Steuerungseinrichtung und/oder die Anzeigeeinrichtung bedarfsgerecht mit elektrischer Energie versorgt werden, so dass die Vorrichtung unabhängig von weiteren Quellen elektrischer Energie ist.

Weiter vorzugsweise ist die Vorrichtung derart ausgebildet, dass die Vorrichtung eine Batterie aufweist, die mit dem Kondensator und/oder der Anzeigeeinrichtung und/oder der Steuerungseinrichtung zur Übertragung von elektrischer Energie elektrisch verbunden ist.

Weiter vorzugsweise ist die Vorrichtung derart ausgebildet, dass das Handgerät eine Sendeantenne zum drahtlosen Übertragen von elektrischer Energie aufweist, wobei die Vorrichtung eine Empfangsantenne zum Empfangen der von der Sendeantenne übertragenen elektrischen Energie aufweist, und wobei die Empfangsantenne mit dem Kondensator und/oder der Anzeigeeinrichtung und/oder der Steuerungseinrichtung zum Übertragen der elektrischen Energie elektrisch verbunden ist.

Weiter vorzugsweise ist die Vorrichtung derart ausgebildet, dass die Vorrichtung zusätzlich zu dem als Referenzkondensator ausgebildeten Kondensator einen Messkondensator mit einer ersten Elektrode und einer zweiten Elektrode aufweist, die jeweils eine Längserstreckung, eine Breitenerstreckung und eine Tiefenerstreckung aufweisen, wobei der Messkondensator mit der elektronischen Steuerungseinrichtung elektrisch gekoppelt ist, und wobei die elektronische Steuerungseinrichtung zur Bestimmung eines Füllstandes des Kunststoffbehälters mittels von dem Referenzkondensator und dem Messkondensator ermittelten Messsignalen ausgebildet ist.

Durch eine entsprechende Ausgestaltung der Vorrichtung lässt sich der Füllstand des Kunststoffbehälters mit einer großen Genauigkeit bestimmen. Denn die elektrischen und/oder dielektrischen Leitfähigkeiten des im Kunststoffbehälter befindlichem Füllguts lässt sich mittels des Referenzkondensators bestimmen, so dass basierend auf dieser Information mittels des Messkondensators der Füllstand bestimmt werden kann.

Durch eine entsprechende Ausbildung des Kunststoffbehälters ist gewährleistet, dass das von dem Kondensator erzeugte elektrische Feld stets auch durch das Füllgut innerhalb des Kunststoffbehälters hindurchtritt.

Vorzugsweise ist der Kunststoffbehälter derart ausgebildet, dass die Bodenwand eine sich in einen Behälterinnenraum erstreckende Erhebung aufweist, wobei der Kondensator an einer Außenseite der Erhebung angeordnet ist.

Durch eine entsprechende Ausbildung des Kunststoffbehälters wird ein Messergebnis mittels des Kondensators weniger durch eventuell am Boden des Kunststoffbehälters abgelagerte Ablagerungen beeinflusst.

Der Messkondensator kann derart parallel an einer Außenfläche einer Seitenwand des Kunststoffbehälters angeordnet sein, dass die Längserstreckungen der ersten Elektrode und der zweiten Elektrode von einer Bodenwand des Kunststoffbehälters in Richtung einer Deckenwand des Kunststoffbehälters verlaufen. Durch eine entsprechende Ausgestaltung des Kunststoffbehälters lässt sich der Füllstand des Kunststoffbehälters mit einer gro-ßen Genauigkeit bestimmen. Denn die elektrischen und/oder dielektrischen Leitfähigkeiten des im Kunststoffbehälter befindlichem Füllguts lässt sich mittels des Referenzkondensators bestimmen, so dass basierend auf dieser Information mittels des Messkondensators der Füllstand bestimmt werden kann.

Die der vorliegenden Erfindung zugrundeliegende Aufgabe wird auch durch ein Verfahren zum Bestimmen einer Qualitätseigenschaft von in einem Kunststoffbehälter befindlichem Füllgut unter Verwendung eines Gebindes nach Anspruch 1 gelöst, wobei das Verfahren folgende Verfahrensschritte aufweist:

- Ermitteln der Qualitätseigenschaft des im Kunststoffbehälters befindlichem Füllguts;
- Vergleichen der Qualitätseigenschaft mit einer Referenz-Qualitätseigenschaft für das Füllgut;
- Ausgeben eines Warnsignals von der Steuerungseinrichtung an die Anzeigeeinrichtung, wenn die Qualitätseigenschaft nicht innerhalb eines vorgegebenen Toleranzbereichs der Referenz-Qualitätseigenschaft liegt;
- Darstellen eines Warnsignals mittels der Anzeigeeinrichtung.

Weitere Vorteile, Einzelheiten und Merkmale der Erfindung ergeben sich nachfolgend aus den erläuterten Ausführungsbeispielen. Dabei zeigen im Einzelnen:

Figur 1: eine schematische Querschnittsdarstellung eines erfindungsgemäßen Kunststoffbehälters mit einer erfindungsgemäßen Vorrichtung zur Bestimmung einer Qualitätseigenschaft von sich im Kunststoffbehälter befindlichem Füllgut; und

Figur 2: eine schematische Seitenansicht einer erfindungsgemäßen Vorrichtung zur Bestimmung einer Qualitätseigenschaft gemäß einer weiteren Ausführungsform der vorliegenden Erfindung, wobei die Vorrichtung auf einer Seitenwand eines Kunststoffbehälters angeordnet ist.

In der nun folgenden Beschreibung bezeichnen gleiche Bezugszeichen gleiche Bauteile bzw. gleiche Merkmale, sodass eine in Bezug auf eine Figur durchgeführte Beschreibung bezüglich eines Bauteils auch für die anderen Figuren gilt, sodass eine wiederholende Beschreibung vermieden wird. Ferner sind einzelne Merkmale, die in Zusammenhang mit einer Ausführungsform beschrieben wurden, auch separat in anderen Ausführungsformen verwendbar.

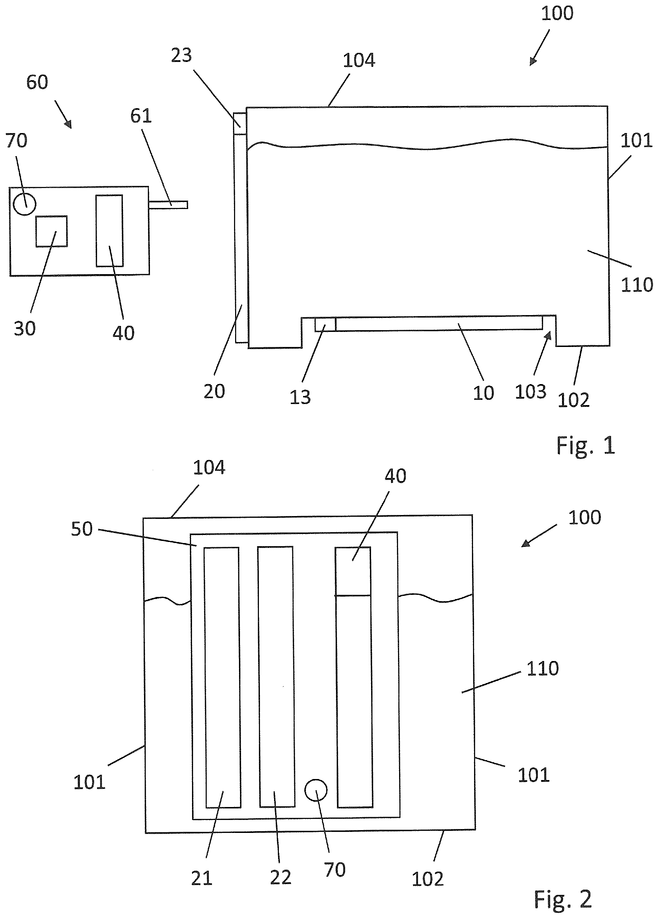

Figur 1 zeigt eine schematische Querschnittsdarstellung eines erfindungsgemäßen Kunststoffbehälters 100. Der Kunststoffbehälter weist eine als Bodenwand 102 ausgebildete Behälterwand 102, eine als Deckenwand 104 ausgebildete Behälterwand 104 und eine umlaufende und die Bodenwand 102 mit der Deckenwand 104 verbindende als Seitenwand 101 ausgebildete Behälterwand 101 auf. Die Bodenwand 102 weist dabei eine sich in einen Behälterinnenraum des Kunststoffbehälters 100 erstreckende Erhebung 103 auf. Innerhalb des durch die Behälterwände definierten Behälterinnenraums ist ein Füllgut 110 angeordnet, dass in der Darstellung der vorliegenden Ausführungsform als Flüssigkeit 110 ausgebildet ist.

Der Kunststoffbehälter 100 weist eine Vorrichtung zum Bestimmen einer Qualitätseigenschaft von dem in dem Kunststoffbehälter 100 befindlichem Füllgut 110 auf. Die Vorrichtung weist dabei einen ersten Kondensator 10 und einen zweiten Kondensator 20 auf. Es ist ersichtlich, dass im Bereich der Bodenwand 102, im Genaueren an der Außenseite der Erhebung 103 der als Referenzkondensator 10 ausgebildete erste Kondensator 10 angebracht ist. An einer Seitenwand 101 ist der als Messkondensator 20 ausgebildete zweite Kondensator 20 angeordnet und mit der Seitenwand 101 verbunden.

Die Vorrichtung weist ferner eine elektronische Steuerungseinrichtung 30 auf, die mit dem ersten Kondensator 10 und/oder mit dem zweiten Kondensator 20 elektrisch gekoppelt ist. Aus der Darstellung gemäß Figur 1 ist ersichtlich, dass die elektronische Steuerungseinrichtung 30 in einem Handgerät 60 der Vorrichtung angeordnet ist. Ferner ist ersichtlich, dass die Vorrichtung eine Anzeigeeinrichtung 40 zum Anzeigen einer Qualitätseigenschaft aufweist. Die Anzeigeeinrichtung 40 ist mit der Steuerungseinrichtung 30 zum Übertragen von Daten von der Steuerungseinrichtung 30 an die Anzeigeeinrichtung 40 datengekoppelt.

Das Handgerät 60 weist eine Antenne 61 auf, die auch als Sendeantenne 61 bezeichnet werden kann. An dem ersten Kondensator 10 ist eine erste Antenne 13, die auch als Empfangsantenne 13 bezeichnet werden kann, angeordnet. Ferner ist an dem zweiten Kondensator 20 eine zweite Antenne 23 angeordnet, die ebenfalls als Empfangsantenne 23 bezeichnet werden kann. Zwischen der in dem Handgerät 60 angeordneten elektronischen Steuerungseinrichtung 30 und dem ersten Kondensator 10 und/oder dem zweiten Kondensator 20 können ferner Daten mittels der Antenne 61, der ersten Antenne 13 und/oder der zweiten Antenne 23 übertragen werden.

Ferner ist es möglich, dass der erste Kondensator 10 und/oder der zweite Kondensator 20 über die Antenne 61 des Handgeräts 60 und über ihre jeweiligen Empfangsantennen 13, 23 mit elektrischer Energie versorgt werden können. Sowohl der erste Kondensator 10 als auch der zweite Kondensator 20 können so ein elektrisches Feld, beispielsweise ein elektrisches Wechselfeld erzeugen, sodass innerhalb des Füllguts 110 elektrische Feldlinien von den jeweiligen ersten Elektroden des ersten Kondensators bzw. des zweiten Kondensators zu den jeweiligen zweiten Elektroden des ersten Kondensators bzw. des zweiten Kondensators verlaufen.

Die elektronische Steuerungseinrichtung 30 ist dazu ausgebildet, basierend auf an den ersten Kondensator 10 und/oder an den zweiten Kondensator 20 angelegten elektrischen Spannungen die Qualitätseigenschaft des Füllguts 110 zu bestimmen und die Qualitätseigenschaft des Füllgut 110 repräsentierende Daten an die Anzeigeeinrichtung 40 zu übertragen.

Die Funktionsweise der erfindungsgemäßen Vorrichtung kann dabei beispielsweise wie folgt sein. Die Steuerungseinrichtung 30 bewirkt ein Abstrahlen eines elektrischen Signals über die Antenne 61 an die Antenne 23 des zweiten Kondensator 20. In Reaktion auf den Empfang der elektrischen Signale erzeugt der zweite Kondensator 20 ein elektrisches Wechselfeld. Der zweite Kondensator 20 generiert Signale, mittels denen Impedanzen und/oder Kapazitäten des zweiten Kondensators 20 in Abhängigkeit von einer Frequenz einer angelegten Wechselspannung korrelieren, und überträgt die Daten über die Antenne 23 an die Antenne 61 zurück an die Steuerungseinrichtung 30. Die Steuerungseinrichtung 30 ermittelt basierend auf den so ermittelten Impedanzen bzw. Kapazitäten des zweiten Kondensators 20 eine elektrische und/oder dielektrische Leitfähigkeit des Füllguts 110. Diese elektrische bzw. dielektrischen Leitfähigkeit des Füllguts 110 wird mit Referenz-Leitwerten (elektrische und/oder dielektrische Leitwerte) verglichen, und in Abhängigkeit des Ergebnisses wird von der Steuerungseinrichtung 30 an die Anzeigeeinrichtung 40 ein Freigabesignal, ein Warnsignal oder ein Stoppsignal ausgegeben.

Bei Empfang eines Freigabesignals wird über die Anzeigeeinrichtung 40 dargestellt, dass die in den Kunststoffbehälter 100 befindliche Flüssigkeit 110 den geforderten Qualitätseigenschaften entspricht. Bei Empfang eines Warnsignals wird über die Anzeigeeinrichtung 40 eine Information dargestellt, über die der Betrachter der Anzeigeeinrichtung 40 darüber in Kenntnis gesetzt wird, dass die in den Kunststoffbehälter 100 befindliche Flüssigkeit 110 der geforderten Qualitätseigenschaft in einem gewissen Toleranzbereich entspricht. Wenn von der Steuerungseinrichtung 30 ein Stoppsignal an die Anzeigeeinrichtung 40 ausgegeben wird, wird über die Anzeigeeinrichtung 40 eine Information dargestellt, die den Betrachter der Anzeigeeinrichtung 40 darüber in Kenntnis setzt, dass die Qualitätseigenschaft des Füllguts 110 nicht den geforderten Qualitätseigenschaften entspricht.

Ferner ist es möglich, dass die Steuerungseinrichtung 30 mittels von dem ersten Kondensator 10 übertragen Messsignalen die elektrische und/oder die dielektrische Leitfähigkeit der Flüssigkeit 110 ermittelt, und dass die Steuerungseinrichtung 30 basierend auf den Messsignalen von dem zweiten Kondensator 20 unter Berücksichtigung der ermittelten elektrischen und/oder dielektrischen Leitfähigkeit der Betriebsflüssigkeit 110 den Füllstand des Kunststoffbehälters 100 bestimmt. Um den Füllstand des Kunststoffbehälters 100 genau ermitteln zu können, ist der Messkondensator 20 derart parallel an der Außenfläche der Seitenwand 101 des Kunststoffbehälters 100 angeordnet, dass die Längserstreckungen einer ersten Elektrode 21 und einer zweiten Elektrode 22 des zweiten Kondensators 20 von der Bodenwand 102 des Kunststoffbehälters 100 in Richtung der Deckenwand 104 des Kunststoffbehälters 100 verlaufen.

Aus Figur 1 ist ferner ersichtlich, dass an dem Handgerät 60 ein Piezoelemente 70 vorgesehen ist. Das Piezoelement 70 ist dabei nicht obligatorisch für die erfindungsgemäße Vorrichtung. Mittels des Piezoelements 70 kann elektrische Energie erzeugt werden, mittels der die Steuerungseinrichtung 30 und/oder die Anzeigeeinrichtung 40 und/oder der erste Kondensator 10 und/oder der zweite Kondensator 20 mit elektrischer Energie versorgt werden können.

Figur 2 zeigt eine schematische Seitenansicht einer erfindungsgemäßen Vorrichtung zur Bestimmung einer Qualitätseigenschaft gemäß einer weiteren Ausführungsform der vorliegenden Erfindung, wobei die Vorrichtung auf der Seitenwand 101 eines Kunststoffbehälters 100 angeordnet ist. Aus Figur 2 ist ersichtlich, dass eine erste Elektrode 21 und eine zweite Elektrode 22 des Kondensators 20 auf einem Trägerelement 50 angeordnet sind. Bei dem Trägerelement 50 handelt es sich vorzugsweise um ein Kunststoff-Trägerelement 50, das reversibel an der Seitenwand 101 des Kunststoffbehälters 100, mittels einer Klebeschicht, befestigt ist.

Aus Figur 2 ist ferner ersichtlich, dass auf dem Trägerelement 50 eine Anzeigeeinrichtung 40 angeordnet ist. Ferner ist bei dem in Figur 2 gezeigten Ausführungsbeispiel ein Piezoelement 70 auf dem Träger 50 angeordnet. Das Piezoelement 70 ist jedoch nicht obligatorisch für die entsprechende Ausbildung der Vorrichtung. Mittels des Piezoelements 70 können die ersten und zweiten Elektroden des Kondensators 20 und/oder die Anzeigeeinrichtung 40 mit elektrischer Energie versorgt werden. Die übrige Funktionsweise der in Figur 2 teilweise dargestellten Vorrichtung ist identisch mit der in Figur 1 gezeigten Ausführungsform, sodass auf die entsprechende Beschreibung verwiesen wird.

Mittels der erfindungsgemäßen Vorrichtung und/oder mittels des erfindungsgemäßen Kunststoffbehälters 100 ist es beispielsweise auch möglich, wenn das Füllgut 110 keine geeigneten elektrischphysikalischen Merkmale für einen sicheren Nachweis bietet, oder wenn zusätzlich eine Verdünnung des Füllguts 110 nachgewiesen werden soll, dass dem Füllgut 110 eine sonst funktionsloser Stoff beigemischt werden kann, mittels dem die elektrische und/oder die dielektrische Leitfähigkeit des Füllguts 110 in einem engen Bereich eingestellt werden kann und der sich bei einer Verdünnung entlang einer bekannten Funktion der gemessenen bzw. bestimmten elektrischen und/oder dielektrischen Leitfähigkeit verändert. Somit kann eine manipulative Verdünnung nachgewiesen werden. Selbstverständlich kann ein entsprechendes Verfahren auch dazu genutzt werden, eine gezielte Verdünnung des Füllguts 110 herbeizuführen.

**Bezugszeichenliste**

| | |
|---|---|
| 10 | (erster) Kondensator, Referenzkondensator |
| 11 | erste Elektrode |
| 12 | zweite Elektrode |
| 13 | (erste) Antenne / Empfangsantenne |
| 20 | (zweiter) Kondensator, Messkondensator |
| 21 | erste Elektrode |
| 22 | zweite Elektrode |
| 23 | (zweite) Antenne / Empfangsantenne |
| 30 | Steuerungseinrichtung |
| 40 | Anzeigeeinrichtung |
| 50 | Trägerelement |
| 60 | Handgerät (der Vorrichtung) |
| 61 | Antenne / Sendeantenne (des Handgeräts) |
| 70 | Piezoelement |
| 100 | Kunststoffbehälter |
| 101 | Behälterwand, Seitenwand (des Kunststoffbehälters) |
| 102 | Behälterwand, Bodenwand (des Kunststoffbehälters) |
| 103 | Erhebung / Einstülpung (der Bodenwand) |
| 104 | Deckenwand |
| 110 | Füllgut |

**Patentansprüche**

1. Gebinde (100) zur Aufnahme von Füllgut (100), wobei das Gebinde ein Kunststoffbehälter ist, umfassend eine Vorrichtung zum Bestimmen einer Qualitätseigenschaft von in dem Gebinde befindlichem Füllgut (110), wobei die Vorrichtung folgendes aufweist:

   - einen an der Außenseite einer Behälterwand (101, 102) des Gebindes (100) angebrachten Kondensator (10, 20), der eine erste Elektrode (21) und eine zweite Elektrode (22) aufweist;
   - eine elektronische Steuerungseinrichtung (30), die mit der ersten Elektrode (21) und der zweiten Elektrode (22) elektrisch gekoppelt ist; und
   - eine Anzeigeeinrichtung (40) zum Anzeigen der Qualitätseigenschaft, wobei die Anzeigeeinrichtung (40) mit der Steuerungseinrichtung (30) zum Übertragen von Daten von der Steuerungseinrichtung (30) an die Anzeigeeinrichtung (40) datengekoppelt ist,

   wobei die elektronische Steuerungseinrichtung (30) dazu ausgebildet ist, basierend auf an den Kondensator (10, 20) angelegten elektrischen Spannungen die Qualitätseigenschaft des Füllguts (110) zu bestimmen und die Qualitätseigenschaft des Füllguts (110) repräsentierenden Daten an die Anzeigeeinrichtung (40) zu übertragen, **dadurch gekennzeichnet, dass** der Kondensator (10,20) auf einem Trägerelement (50) angeordnet ist, wobei das Trägerelement eine Klebeschicht aufweist, die derart ausgebildet ist, dass das Trägerelement reversibel auf der Behälterwand anbringbar ist.

2. Gebinde (100) nach einem der vorangehenden Ansprüche, **gekennzeichnet durch** die folgenden Merkmale:

    - der Kondensator (10) ist im Bereich einer Bodenwand (102) des Gebindes (100) angebracht und dient als Referenzkondensator (10)
    - die Vorrichtung weist zusätzlich einen an einer Seitenwand (101) des Gebindes (100) einen Messkondensator (20) mit einer ersten Elektrode (21) und einer zweiten Elektrode (22) auf;
    - der Messkondensator (20) ist mit der elektronischen Steuerungseinrichtung (30) elektrisch gekoppelt
    - der Messkondensator (20) ist derart parallel an einer Außenfläche einer Seitenwand (101) des Gebindes (100) angeordnet, dass die Längserstreckungen der ersten Elektrode (21) und der zweiten Elektrode (22) von einer Bodenwand (102) des Gebindes (100) in Richtung einer Deckenwand (104) des Gebindes (100) verlaufen;
    - die elektronische Steuerungseinrichtung (30) ist zur Bestimmung eines Füllstandes des Gebindes (100) mittels von dem Referenzkondensator (10) und dem Messkondensator (20) ermittelten Messsignalen ausgebildet.

3. Gebinde (100) nach Anspruch 2, **gekennzeichnet durch** die folgenden Merkmale:

    - die Vorrichtung weist ein mikroelektromechanisches System auf, mittels dem eine Raumlage des Trägerelements (50) bestimmbar ist;
    - das mikroelektromechanische System ist mit der Steuerungseinrichtung (30) zum Übertragen von die Raumlage des Trägerelements (50) repräsentierenden Daten datengekoppelt; und
    - die Anzeigeeinrichtung (40) ist dazu ausgebildet, basierend auf den die Raumlage des Trägerelements (50) repräsentierenden Daten einen Pegelverlauf des Füllguts (110) innerhalb des Gebindes (100) darzustellen.

4. Gebinde (100) nach einem der Ansprüche 1 bis 3, **dadurch gekennzeichnet, dass** die Anzeigeeinrichtung (40) zusammen mit dem Kondensator (10, 20) auf dem Trägerelement (50) angeordnet ist.

5. Gebinde (100) nach einem der Ansprüche 1 bis 4, **dadurch gekennzeichnet, dass** die Steuerungseinrichtung (30) zusammen mit dem Kondensator (10, 20) auf dem Trägerelement (50) angeordnet ist.

6. Gebinde (100) nach einem der Ansprüche 1 bis 3 oder 5, **dadurch gekennzeichnet, dass** die Anzeigeeinrichtung (40) von dem Kondensator (10, 20) räumlich getrennt ist.

7. Gebinde (100) nach einem der Ansprüche 1 bis 4 oder 6 **dadurch gekennzeichnet, dass** die Steuerungseinrichtung (30) von dem Kondensator (10, 20) räumlich getrennt ist.

8. Gebinde (100) nach einer Kombination der Ansprüche 6 und 7, **dadurch gekennzeichnet, dass** die Vorrichtung ein Handgerät (60) aufweist, in dem die Anzeigeeinrichtung (40) und/oder die Steuerungseinrichtung (30) angeordnet ist/sind.

9. Gebinde (100) nach einem der vorhergehenden Ansprüche, **gekennzeichnet durch** folgende Merkmale:

    - die Vorrichtung weist ein Piezoelement (70) zum Erzeugen von elektrischer Energie auf; und
    - das Piezoelement (70) ist mit dem Kondensator (10, 20) zur Übertragung von elektrischer Energie und zum Anlegen einer elektrischen Spannung an den Kondensator (10, 20) elektrisch verbunden.

10. Gebinde (100) nach Anspruch 9, **dadurch gekennzeichnet, dass** das Piezoelement (70) mit der Anzeigeeinrichtung (40) zur Übertragung von elektrischer Energie an die Anzeigeeinrichtung (40) elektrisch verbunden ist.

11. Gebinde (100) nach Anspruch 9 oder 10, **dadurch gekennzeichnet, dass** das Piezoelement (70) zur Übertragung von elektrischer Energie mit der Steuerungseinrichtung (30) verbunden ist.

12. Gebinde (100) nach einem der vorhergehenden Ansprüche, **dadurch gekennzeichnet, dass** die Vorrichtung eine Batterie aufweist, die mit dem Kondensator (10, 20) und/oder der Anzeigeeinrichtung (40) und/oder der Steuerungseinrichtung (30) zur Übertragung von elektrischer Energie elektrisch verbunden ist.

13. Gebinde (100) nach Anspruch 8, **gekennzeichnet durch** die folgenden Merkmale:

- das Handgerät (60) weist eine erste Antenne (61) zum drahtlosen Übertragen von elektrischer Energie auf;
- die Vorrichtung weist eine zweite Antenne (13, 23) zum Empfangen der von der Sendeantenne übertragenen elektrischen Energie auf; und
- die zweite Antenne (13, 23) ist mit dem Kondensator (10, 20) und/oder der Anzeigeeinrichtung (40) und/oder der Steuerungseinrichtung (30) zum Übertragen der elektrischen Energie elektrisch verbunden.

14. Gebinde (100) nach einem der vorangehenden Ansprüche, **dadurch gekennzeichnet, dass** der Kondensator (10, 20) an einer Bodenwand (102) des Gebindes (100) angeordnet ist.

15. Gebinde nach einem der vorangehenden Ansprüche, **dadurch gekennzeichnet, dass** die Bodenwand (102) eine sich in einen Behälterinnenraum erstreckende Erhebung (103) aufweist, wobei der Kondensator (20) an einer Außenseite der Erhebung (103) angeordnet ist.

16. Gebinde (100) nach einem der 14 oder 15, **gekennzeichnet durch** die folgenden Merkmale:

- der Gebinde (100) weist eine Vorrichtung nach Anspruch 13 auf; und
- der Messkondensator (20) ist derart parallel an einer Außenfläche einer Seitenwand (101) des Gebindes (100) angeordnet, dass die Längserstreckungen der ersten Elektrode (21) und der zweiten Elektrode (22) von einer Bodenwand (102) des Gebindes (100) in Richtung einer Deckenwand (104) des Gebindes (100) verlaufen.

17. Verfahren zum Bestimmen einer Qualitätseigenschaft von in einem Gebinde (100) befindlichem Füllgut (110) unter Verwendung eines Gebindes (100) nach einem der vorangehenden Ansprüche, wobei das Verfahren folgende Verfahrensschritte aufweist:

- Ermitteln der Qualitätseigenschaft des im Gebinde befindlichen Füllguts (110);
- Vergleichen der Qualitätseigenschaft mit einer Referenz-Qualitätseigenschaft für das Füllgut (110);
- Ausgeben eines Warnsignals von der Steuerungseinrichtung (30) an die Anzeigeeinrichtung (40), wenn die Qualitätseigenschaft nicht innerhalb eines vorgegebenen Toleranzbereichs der Referenz-Qualitätseigenschaft liegt;
- Darstellen eines Warnsignals mittels der Anzeigeeinrichtung (40) .

**Claims**

1. A container (100) for receiving filling material (100), wherein the container is a plastic container, comprising a device for determining a quality property of filling material (110) located in the container, wherein the device has the following:

- a capacitor (10, 20) that is attached to the outer side of a container wall (101, 102) of the container (100) and has a first electrode (21) and a second electrode (22);
- an electronic control apparatus (30) which is electrically coupled to the first electrode (21) and the second electrode (22); and
- a display apparatus (40) for displaying the quality property, wherein the display apparatus (40) is data-coupled to the control apparatus (30) for transmitting data from the control apparatus (30) to the display apparatus (40),

wherein the electronic control apparatus (30) is designed to determine the quality property of the filling material (110) based on electrical voltages applied to the capacitor (10, 20), and to transmit data representing the quality property of the filling material (110) to the display apparatus (40), **characterized in that** the capacitor (10, 20) is arranged on a carrier element (50), wherein the carrier element has an adhesive layer which is designed such that the carrier element can be reversibly attached to the container wall.

2. The container (100) according to any of the preceding claims, **characterized by** the following features:

- the capacitor (10) is attached in the region of a bottom wall (102) of the container (100) and serves as a reference capacitor (10);

- the device additionally has a measuring capacitor (20) with a first electrode (21) and a second electrode (22) on a side wall (101) of the container (100);
- the measuring capacitor (20) is electrically coupled to the electronic control apparatus (30);
- the measuring capacitor (20) is arranged parallel to an outer surface of a side wall (101) of the container (100) such that the longitudinal extensions of the first electrode (21) and the second electrode (22) run from a bottom wall (102) of the container (100) in the direction of a top wall (104) of the container (100);
- the electronic control apparatus (30) is designed to determine a fill level of the container (100) by means of measuring signals determined by the reference capacitor (10) and the measuring capacitor (20).

3. The container (100) according to claim 2, **characterized by** the following features:

- the device has a microelectromechanical system by means of which a spatial position of the carrier element (50) can be determined;
- the microelectromechanical system is data-coupled to the control apparatus (30) for transmitting data representing the spatial position of the carrier element (50); and
- the display apparatus (40) is designed to display a level profile of the filling material (110) within the container (100) based on the data representing the spatial position of the carrier element (50).

4. The container (100) according to any of claims 1 to 3, **characterized in that** the display apparatus (40) is arranged together with the capacitor (10, 20) on the carrier element (50).

5. The container (100) according to any of claims 1 to 4, **characterized in that** the control apparatus (30) is arranged together with the capacitor (10, 20) on the carrier element (50).

6. The container (100) according to any of claims 1 to 3 or 5, **characterized in that** the display apparatus (40) is spatially separated from the capacitor (10, 20).

7. The container (100) according to any of claims 1 to 4 or 6, **characterized in that** the control apparatus (30) is spatially separated from the capacitor (10, 20).

8. The container (100) according to a combination of claims 6 and 7, **characterized in that** the device has a hand-held device (60) in which the display apparatus (40) and/or the control apparatus (30) is/are arranged.

9. The container (100) according to any of the preceding claims, **characterized by** the following features:

- the device has a piezo element (70) for generating electrical energy; and
- the piezo element (70) is electrically connected to the capacitor (10, 20) for transmitting electrical energy and for applying an electrical voltage to the capacitor (10, 20).

10. The container (100) according to claim 9, **characterized in that** the piezo element (70) is electrically connected to the display apparatus (40) for transmitting electrical energy to the display apparatus (40).

11. The container (100) according to either claim 9 or claim 10, **characterized in that** the piezo element (70) for transmitting electrical energy is connected to the control apparatus (30).

12. The container (100) according to any of the preceding claims, **characterized in that** the device has a battery which is electrically connected to the capacitor (10, 20) and/or the display apparatus (40) and/or the control apparatus (30) for transmitting of electrical energy.

13. The container (100) according to claim 8, **characterized by** the following features:

- the hand-held device (60) has a first antenna (61) for wirelessly transmitting electrical energy;
- the device has a second antenna (13, 23) for receiving the electrical energy transmitted by the transmitting antenna; and
- the second antenna (13, 23) is electrically connected to the capacitor (10, 20) and/or the display apparatus (40) and/or the control apparatus (30) for transmitting the electrical energy.

**14.** The container (100) according to any of the preceding claims, **characterized in that** the capacitor (10, 20) is arranged on a bottom wall (102) of the container (100).

**15.** The container according to any of the preceding claims, **characterized in that** the bottom wall (102) has an elevation (103) extending into a container interior, wherein the capacitor (20) is arranged on an outer side of the elevation (103).

**16.** The container (100) according to either claim 14 or claim 15, **characterized by** the following features:

- the container (100) has a device according to claim 13; and
- the measuring capacitor (20) is arranged parallel to an outer surface of a side wall (101) of the container (100) such that the longitudinal extensions of the first electrode (21) and the second electrode (22) run from a bottom wall (102) of the container (100) in the direction of a top wall (104) of the container (100).

**17.** A method for determining a quality property of filling material (110) located in a container (100) using a container (100) according to any of the preceding claims, wherein the method comprises the following method steps:

- determining the quality property of the filling material located in the container (110);
- comparing the quality property with a reference quality property for the filling material (110);
- outputting a warning signal from the control apparatus (30) to the display apparatus (40) if the quality property is not within a predetermined tolerance range of the reference quality property;
- displaying a warning signal by means of the display apparatus (40).

**Revendications**

**1.** Récipient (100) pour la réception d'un produit de remplissage (100), dans lequel le récipient est un réservoir en matière plastique, comprenant un dispositif pour la détermination d'une propriété de qualité du produit de remplissage (110) se trouvant dans le récipient, dans lequel le dispositif présente ce qui suit :

- un condenseur (10, 20) monté sur le côté extérieur d'une paroi de réservoir (101, 102) du récipient (100), lequel condenseur présente une première électrode (21) et une seconde électrode (22) ;
- un équipement de commande (30) électronique qui est couplé électriquement à la première électrode (21) et à la seconde électrode (22) ; et
- un équipement d'affichage (40) pour l'affichage de la propriété de qualité, dans lequel l'équipement d'affichage (40) est couplé en données à l'équipement de commande (30) pour la transmission de données de l'équipement de commande (30) à l'équipement d'affichage (40),

dans lequel l'équipement de commande (30) électronique est configuré pour déterminer, sur la base de tensions électriques appliquées au condenseur (10, 20), la propriété de qualité du produit de remplissage (110) et pour transmettre des données représentant la propriété de qualité du produit de remplissage (110) à l'équipement d'affichage (40), **caractérisé en ce que** le condenseur (10, 20) est disposé sur un élément de support (50), dans lequel l'élément de support présente une couche adhésive qui est conçue de telle sorte que l'élément de support peut être monté de manière réversible sur la paroi de réservoir.

**2.** Récipient (100) selon l'une des revendications précédentes,
**caractérisé par** les caractéristiques suivantes :

- le condenseur (10) est monté dans la zone d'une paroi formant fond (102) du récipient (100) et sert de condenseur de référence (10)
- le dispositif présente en outre un condenseur de précision (20) sur une paroi latérale (101) du récipient (100) comportant une première électrode (21) et une seconde électrode (22) ;
- le condenseur de précision (20) est couplé électriquement à l'équipement de commande (30) électronique
- le condenseur de précision (20) est disposé parallèlement à une surface extérieure d'une paroi latérale (101) du récipient (100) de telle sorte que les extensions longitudinales de la première électrode (21) et de la seconde électrode (22) évoluent à partir d'une paroi formant fond (102) du récipient (100) en direction d'une paroi formant plafond (104) du récipient (100) ;
- l'équipement de commande (30) électronique est configuré pour déterminer un niveau de remplissage du récipient (100) au moyen de signaux de mesure détectés par le condenseur de référence (10) et le condenseur de précision (20).

3. Récipient (100) selon la revendication 2, **caractérisé par** les caractéristiques suivantes :

- le dispositif présente un système microélectromécanique au moyen duquel une position spatiale de l'élément de support (50) peut être déterminée ;
- le système microélectromécanique est couplé en données à l'équipement de commande (30) pour la transmission de données représentant la position spatiale de l'élément de support (50) ; et
- l'équipement d'affichage (40) est configuré pour exposer, sur la base des données représentant la position spatiale de l'élément de support (50), une évolution de niveau du produit de remplissage (110) à l'intérieur du récipient (100).

4. Récipient (100) selon l'une des revendications 1 à 3,
**caractérisé en ce que** l'équipement d'affichage (40) est disposé sur l'élément de support (50) conjointement avec le condenseur (10, 20).

5. Récipient (100) selon l'une des revendications 1 à 4,
**caractérisé en ce que** l'équipement de commande (30) est disposé sur l'élément de support (50) conjointement avec le condenseur (10, 20).

6. Récipient (100) selon l'une des revendications 1 à 3 ou 5,
**caractérisé en ce que** l'équipement d'affichage (40) est spatialement séparé du condenseur (10, 20).

7. Récipient (100) selon l'une des revendications 1 à 4 ou 6 ,
**caractérisé en ce que** l'équipement de commande (30) est spatialement séparé du condenseur (10, 20).

8. Récipient (100) selon une combinaison des revendications 6 et 7, **caractérisé en ce que** le dispositif présente un appareil portatif (60) dans lequel sont disposés l'équipement d'affichage (40) et/ou l'équipement de commande (30).

9. Récipient (100) selon l'une des revendications précédentes,
**caractérisé par** les caractéristiques suivantes :

- le dispositif présente un élément piézoélectrique (70) pour la génération d'énergie électrique ; et
- l'élément piézoélectrique (70) est connecté électriquement au condenseur (10, 20) pour la transmission d'énergie électrique et pour l'application d'une tension électrique au condenseur (10, 20).

10. Récipient (100) selon la revendication 9, **caractérisé en ce que** l'élément piézoélectrique (70) est connecté électriquement à l'équipement d'affichage (40) pour la transmission d'énergie électrique à l'équipement d'affichage (40).

11. Récipient (100) selon la revendication 9 ou 10, **caractérisé en ce que** l'élément piézoélectrique (70) est connecté à l'équipement de commande (30) pour la transmission d'énergie électrique.

12. Récipient (100) selon l'une des revendications précédentes,
**caractérisé en ce que** le dispositif présente une batterie qui est connectée électriquement au condenseur (10, 20) et/ou à l'équipement d'affichage (40) et/ou à l'équipement de commande (30) pour la transmission d'énergie électrique.

13. Récipient (100) selon la revendication 8, **caractérisé par** les caractéristiques suivantes :

- l'appareil portatif (60) présente une première antenne (61) pour la transmission sans fil d'énergie électrique ;
- le dispositif présente une seconde antenne (13, 23) pour l'obtention de l'énergie électrique transmise par l'antenne d'émission ; et
- la seconde antenne (13, 23) est connectée électriquement au condenseur (10, 20) et/ou à l'équipement d'affichage (40) et/ou à l'équipement de commande (30) pour la transmission de l'énergie électrique.

14. Récipient (100) selon l'une des revendications précédentes,
**caractérisé en ce que** le condenseur (10, 20) est disposé sur une paroi formant fond (102) du récipient (100).

**15.** Récipient selon l'une des revendications précédentes,
**caractérisé en ce que** la paroi formant fond (102) présente une saillie (103) s'étendant dans un espace intérieur de réservoir, dans lequel le condenseur (20) est disposé sur un côté extérieur de la saillie (103).

**16.** Récipient (100) selon l'une des revendications 14 ou 15, **caractérisé par** les caractéristiques suivantes :

- le récipient (100) présente un dispositif selon la revendication 13 ; et
- le condenseur de précision (20) est disposé parallèlement à une surface extérieure d'une paroi latérale (101) du récipient (100) de telle sorte que les extensions longitudinales de la première électrode (21) et de la seconde électrode (22) évoluent à partir d'une paroi formant fond (102) du récipient (100) en direction d'une paroi formant plafond (104) du récipient (100).

**17.** Procédé pour la détermination d'une propriété de qualité d'un produit de remplissage (110) se trouvant dans un récipient (100) à l'aide d'un récipient (100) selon l'une des revendications précédentes, dans lequel le procédé présente les étapes de procédé suivantes :

- détection de la propriété de qualité du produit de remplissage (110) se trouvant dans le récipient ;
- comparaison de la propriété de qualité à une propriété de qualité de référence pour le produit de remplissage (110) ;
- diffusion d'un signal d'avertissement par l'équipement de commande (30) vers l'équipement d'affichage (40) lorsque la propriété de qualité n'est pas comprise dans une plage de tolérance prédéterminée de la propriété de qualité de référence ;
- exposition d'un signal d'avertissement au moyen de l'équipement d'affichage (40).

Fig. 1

Fig. 2

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 5051921 A
- DE 102005022933 A1